# EUROPÄISCHE PATENTSCHRIFT

(11) **EP 2 305 409 B1**
(45) Veröffentlichungstag und Bekanntmachung des Hinweises auf die Patenterteilung: **20.06.2012**
(21) Anmeldenummer: 10009903.5
(22) Anmeldetag: 20.09.2010
(51) Int. Cl.: B23F 23/04, B23F 23/12, B23Q 1/54, B23Q 39/02, B24B 5/313

(54) **Verfahren zum Betreiben einer Verzahnungs- oder Profilschleifmaschine und Verzahnungs- oder Profilschleifmaschine**
Method for operating a cogging or profile grinding machine and cogging or profile grinding machine
Procédé de fonctionnement d'une machine de rectification de dents ou de profilés et machine de rectification de dents ou de profilés

(30) Priorität: 02.10.2009 DE 102009048012
(43) Veröffentlichungstag der Anmeldung: 06.04.2011
(73) Patentinhaber: Kapp GmbH, 96450 Coburg (DE); NILES Werkzeugmaschinen GmbH, 12681 Berlin (DE)
(72) Erfinder: Amarell, Wieland, 98673 Brattendorf (DE); Tenner, Alfred, 96524 Rottmar (DE); Weiss, Bernd, 96472 Roedental (DE); Woelfel, Friedrich, 96450 Coburg (DE)
(74) Vertreter: Gosdin, Michael

(56) Entgegenhaltungen:
- EP-B1- 1 146 983
- WO-A1-2006/010709
- DE-U1- 29 617 120
- DE-U1-202006 002 878
- US-A1- 2002 197 121

## Beschreibung

Die Erfindung betrifft ein Verfahren zum Betreiben einer Verzahnungs- oder Profilschleifmaschine zum Schleifen vorverzahnter bzw. vorprofilierter Werkstücke, wobei die Maschine mindestens eine Werkzeugspindel aufweist, auf der mindestens ein Schleifwerkzeug aufgenommen werden kann, und wobei die Maschine mindestens zwei Werkstückspindeln aufweist, die zumindest zeitweise zum Zusammenwirken des Werkstücks mit dem Schleifwerkzeug an die Werkzeugspindel heranfahrbar sind. Des weiteren betrifft die Erfindung eine Verzahnungs- und Profilschleifmaschine.

Insbesondere bei der Herstellung von Zahnrädern kommt dem abschließenden Schleifprozess eine wichtige Bedeutung zu. Bei diesem werden die Zahnflanken einer Schleifoperation unterzogen, mit der sie auf die genaue Kontur gebracht werden. Eine effiziente Verfahrensweise bei der Herstellung der Verzahnung ist das Wälzschleifen mit einer Schleifschnecke oder das Profilschleifen mit einer Profilschleifscheibe.

Bei Werkstücken insbesondere mit kleinen Verzahnungen (Kopfkreisdurchmesser bis ca. 200 mm) ist die Prozess-Hauptzeit im Verhältnis zu den Nebenzeiten relativ kurz. Aufgrund der relativ niedrigen Hauptzeit werden zum Erzielen eines wirtschaftlichen Fertigungsprozesses Maschinen und Schleifverfahren benötigt, die mit einem verbesserten Verhältnis zwischen Hauptzeit zu Nebenzeit aufwarten. Dies gilt insbesondere dann, wenn zusätzlich auch die Werkstück-Losgrößen - als Folge einer zunehmenden Bauteil-Variantenvielfalt - sinken. Damit kommt der Reduzierung der Rüstzeit eine immer größere Bedeutung zu.

Ein Verfahren bzw. eine entsprechende Verzahnungsschleifmaschine der eingangs genannten Art sind aus der EP 1 146 983 B1 bekannt. Hier wird ein Rundschalttisch mit zwei Werkstückspindeln ausgestattet. Durch Drehung des Rundschalttisches um 180° kann ein in einer Be- und Entladestation gespanntes Werkstück zu einem Schleifwerkzeug verfahren werden, während gleichzeitig ein geschliffenes Werkstück zur Be- und Entladestation verfahren wird. Mit dieser Lösung kann bereits ein relativ günstiges Verhältnis zwischen Haupt- und Nebenzeiten erreicht werden, da parallel zum Schleifen eines Werkstücks ein Spannen und Ausrichten des nächsten Werkstücks erfolgen kann.

Allerdings sind die mit dem vorbekannten Verfahren bzw. mit der vorbekannten Schleifmaschine erreichbaren Verhältnisse zwischen Haupt-und Nebenzeiten immer noch nicht befriedigend.

Der Erfindung liegt daher die Aufgabe zugrunde, ein Verfahren sowie eine Schleifmaschine der eingangs genannten Art so fortzubilden, dass es möglich wird, ein weiter verbessertes Verhältnis zwischen Bearbeitungs-Haupt- und -Nebenzeiten zu erreichen. Demgemäß sollen sich das Verfahren bzw. die Vorrichtung durch eine weiter verbesserte wirtschaftliche Betriebsweise auszeichnen. Gleichermaßen soll der Rüstanteil im Verhältnis zu den Bearbeitungs-Hauptzeiten so gering wie möglich sein, um das genannte Ziel zu erreichen.

Die Lösung dieser Aufgabe durch die Erfindung ist verfahrensgemäß dadurch gekennzeichnet, dass die mindestens zwei Werkstückspindeln zwecks Verbringung von einer Schleifposition zu einer Beladeposition und umgekehrt um eine jeweilige Schwenkachse verschwenkt werden, wobei die Verschwenkung der beiden Werkstückspindeln unabhängig voneinander erfolgt.

Dabei sind die beiden Schwenkachsen vorzugsweise vertikal ausgerichtet.

Die beiden Schwenkachsen sind ferner gemäß einer bevorzugten Ausgestaltung parallel und in einem Abstand zueinander angeordnet. In diesem Falle sieht eine bevorzugte Ausführungsform vor, dass zum Verschwenken der Werkstückspindeln von der Schleifposition zu der Beladeposition und umgekehrt diese um die jeweilige Schwenkachse um einen Winkel zwischen 180° und 240°, vorzugsweise zwischen 200° und 230°, geschwenkt werden.

Möglich ist es auch, dass die beiden Schwenkachsen konzentrisch angeordnet sind. In diesem Falle sieht eine bevorzugte Ausgestaltung der Erfindung vor, dass zum Verschwenken der Werkstückspindeln von der Schleifposition zu der Beladeposition und umgekehrt diese um die jeweilige Schwenkachse um einen Winkel zwischen 180° und 360°, vorzugsweise zwischen 180° und 270°, geschwenkt werden. Die Verschwenkung um ca. 270° ermöglicht eine sehr vorteilhafte Betriebsweise: Verschiedene Peripherieelemente, auf die nachfolgend noch im Detail eingegangen wird (z. B. eine Schleuderstation, eine SPC-Station, etc.), können dann nur einmal für beide verschwenkbare Werkstückspindeln vorgesehen und von beiden Werkstückspindeln benutzt werden.

Die Verzahnungs- und Profilschleifmaschine, die mindestens eine Werkzeugspindel aufweist, auf der mindestens ein Schleifwerkzeug aufgenommen werden kann, und die mindestens zwei Werkstückspindeln aufweist, die zumindest zeitweise zum Zusammenwirken des Werkstücks mit dem Schleifwerkzeug an die Werkzeugspindel heranfahrbar sind, zeichnet sich dadurch aus, dass die mindestens zwei Werkstückspindeln zwecks Verbringung von einer Schleifposition zu einer Beladeposition und umgekehrt um eine jeweilige Schwenkachse verschwenkbar angeordnet sind, wobei die Maschine zum unabhängigen Verschwenken der beiden Werkstückspindeln ausgebildet ist.

Die beiden Schwenkachsen können vertikal ausgerichtet sein; weiterhin können sie parallel und in einem Abstand zueinander angeordnet sein. Die Werkstückspindeln können dabei bei ihrer Verschwenkung um die Schwenkachsen Kreisbögen beschreiben, wobei die Werkzeugspindel im Bereich eines der Schnittpunkte der beiden Kreisbögen angeordnet ist; im Bereich des anderen Schnittpunkts der Kreisbögen kann eine Be- und/oder Entladestation für die Werkstücke angeordnet sein.

Eine alternative Ausbildung sieht vor, dass die beiden Schwenkachsen der beiden Werkstückspindeln konzentrisch zueinander angeordnet sind.

Im Bereich der Werkzeugspindel kann ein Gegenhalter ortsfest auf oder an einem Maschinenbett angeordnet sein. Dieser Gegenhalter kann von beiden Werkstückspindeln genutzt werden.

Vorgesehen werden können auch weitere Peripheriegeräte:
An einer Stelle entlang des Kreisbogens kann ein Ausrichtgerät für das Werkstück ortsfest auf oder an dem Maschinenbett angeordnet sein.
An einer der beiden Werkstückspindeln kann ferner ein Abrichtgerät für das Schleifwerkzeug angeordnet sein, das zusammen mit der entsprechenden Werkstückspindel verschwenkt werden kann. Damit kann bei Bedarf das Schleifwerkzeug abgerichtet werden, indem die entsprechende Werkstückspindel mit dem Abrichtgerät in die Schleifposition geschwenkt wird.
An einer Stelle entlang des Kreisbogens kann weiterhin eine Schleuderstation für das Werkstück ortsfest auf oder an dem Maschinenbett angeordnet sein.
An einer weiteren Stelle entlang des Kreisbogens kann eine Spannmittel-Wechselstation ortsfest auf oder an dem Maschinenbett angeordnet sein. Weiterhin kann eine Station zur Ablage eines Werkstücks auf oder an dem Maschinenbett angeordnet sein. Eine bevorzugte Ausgestaltung sieht dabei vor, dass die Spannmittel-Wechselstation bzw. die Station zur Ablage eines Werkstücks einen Rundschalttisch mit mindestens zwei Ablageplätzen aufweist. Die Spannmittel-Wechselstation und die Station zur Ablage eines Werkstücks sind dabei bevorzugt als kombinierte Einheit ausgebildet.

Im Bereich der Werkzeugspindel kann schließlich eine Schleifwerkzeug-Wechselstation ortsfest auf oder an dem Maschinenbett angeordnet sein.

Mit der vorgeschlagenen Verzahnungs- bzw. Profilschleifmaschine werden bevorzugt Werkstücke mit kleinen Verzahnungen bearbeitet, die einen maximalen Kopfkreisdurchmesser bis ca. 200 mm aufweisen; gleichermaßen eignet sich der Erfindungsvorschlag besonders für kurze Wellenteile, ggf. mit mehreren Verzahnungen. Der Erfindungsvorschlag eignet sich besonders für Verzahnungen und Sonderprofile im Serienbereich.

Das vorgeschlagene Maschinenkonzept kann also als "Pick-Up"-Konzept bezeichnet werden, wobei die Werkstücke an einer Beladestation auf eine Werkstückspindel aufgenommen und unabhängig von einer weiteren Werkstückspindel zur Bearbeitungsstation geschwenkt werden.

Mit diesem Konzept können die Nebenzeit optimiert (minimiert) und Rüstprozesse und Automatisierungsfunktionalitäten integriert werden. Das Be- und Entladen der Werkstückspindeln mit Werkstücken, das Spannen, das Ausrichten (Einmitten) der Verzahnung, das Beschleunigen und Abbremsen sowie das Schleudern der Werkstücke können parallel zum Schleifen auf der anderen Werkstückspindel realisiert werden.

Demgemäß ermöglicht das vorgeschlagene Konzept auch eine wesentliche Verbesserung bezüglich der Rüstzeiten.

In der Zeichnung sind Ausführungsbeispiele der Erfindung dargestellt. Es zeigen:
- Fig. 1: in perspektivischer Ansicht eine Verzahnungsschleifmaschine mit zwei Säulen, um die zwei Werkstückspindeln geschwenkt werden können, um sie von einer Be- und Entladestation zu einer Schleifposition und zurück zu bewegen,
- Fig. 2: die zu Fig. 1 zugehörige Vorderansicht und

- Fig. 3: die zu Fig. 1 zugehörige Draufsicht,
- Fig. 4: in perspektivischer Ansicht eine Verzahnungsschleifinaschine in einer zu Fig. 1 alternativen Ausgestaltung,
- Fig. 5: die zu Fig. 4 zugehörige Vorderansicht und
- Fig. 6: die zu Fig. 4 zugehörige Draufsicht.

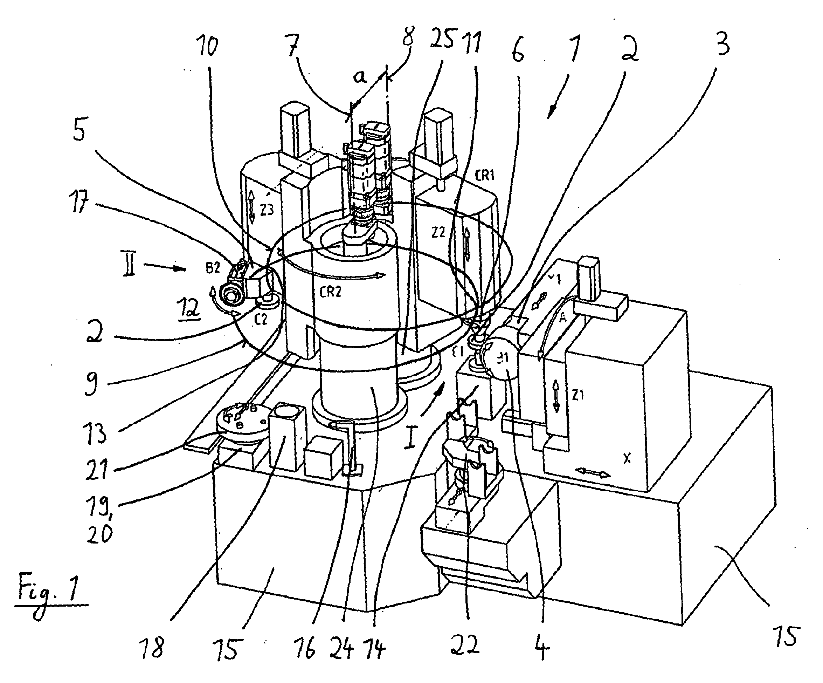

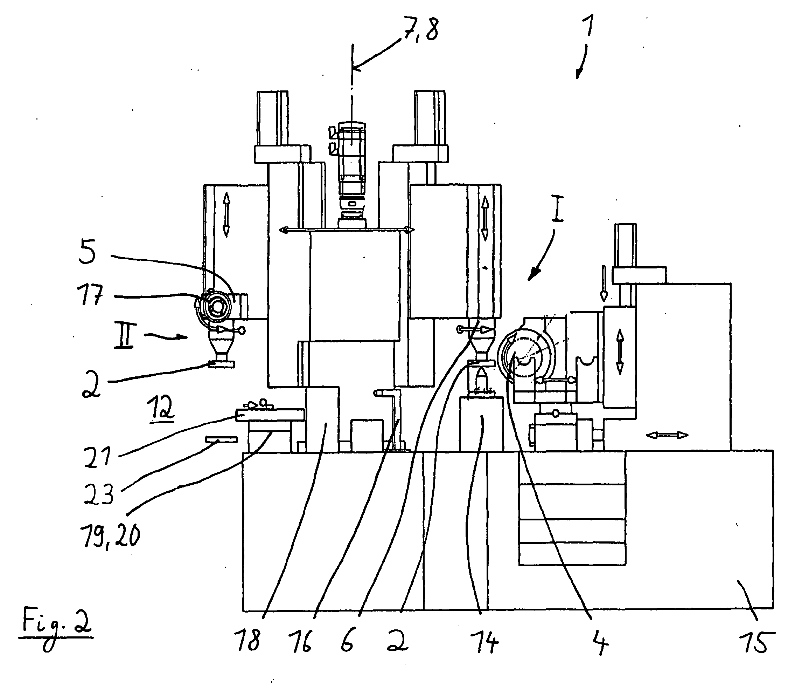

In den Figuren 1 bis 3 ist eine Verzahnungsschleifmaschine 1 in einer ersten Ausführungsform dargestellt. Die Maschine 1 hat ein Maschinenbett 15, auf dem zunächst die üblichen Elemente angeordnet sind, um eine Verzahnungsschleifoperation vornehmen zu können. Demgemäß hat die Maschine 1 insbesondere eine Werkzeugspindel 3 mit einem Schleifwerkzeug 4 (Schleifscheibe oder Schleifschnecke, gegebenenfalls auch in Achsrichtung versetzt mehrere Schleifwerkzeuge für das Schruppen und Schlichten), die auf einer entsprechenden beweglichen Führung so angeordnet ist, dass sie die für den Schleifvorgang benötigten Bewegungen ausführen kann. In den Figuren sind mit Doppelpfeilen die vorgesehenen Bewegungsrichtungen angegeben. Auf diese wird allerdings nicht näher eingegangen, da es sich dabei um übliche Achsen handelt.

Nicht typisch für eine Verzahnungsschleifmaschine ist indes, dass zwei Werkstückspindeln 5 und 6 vorgesehen sind, die jeweils zur Aufnahme eines Werkstücks 2 ausgebildet sind. Diese beiden Werkstückspindeln 5, 6 sind an zwei säulenartigen Führungen 24 und 25 so angeordnet, dass sie um zwei vertikal angeordnete Schwenkachsen 7 bzw. 8 verschwenkt werden können. Die beiden Schwenkachsen befinden sich in einem Abstand a (s. Fig. 1). Das Verschwenken kann erfolgen, um ein auf der Werkstückspindel 5, 6 gespanntes Werkstück 2 von einer Schleifposition I zu einer Beladeposition II bzw. umgekehrt von der Position II zu der Position I bewegen zu können.

Dabei ist also vorgesehen, dass beiden Werkstückspindeln 5, 6 zwecks Verbringung von der Schleifposition I zur Beladeposition II und umgekehrt um die jeweilige Schwenkachse 7, 8 verschwenkt werden. Wesentlich ist dabei, dass die Verschwenkung der beiden Werkstückspindeln 5, 6 unabhängig voneinander erfolgt.

Demgemäß beschreiben die Werkstücke 2 bzw. die diese haltenden Werkstückspindeln 5 und 6 beim hin und her Verschwenken zwischen den Positionen I und II Kreisbögen 9 bzw. 10. Aufgrund des Abstands a ergeben sich zwei Schnittpunkte der Kreisbögen, die mit 11 bzw. 13 bezeichnet sind. Der dem Werkzeug 4 zugewandte Schnittpunkt 11 ist der Ort an dem eine Werkstückspindel 5 oder 6 samt Werkstück 2 positioniert wird, wenn das Werkstück 2 in der Schleifposition I bearbeitet wird. Indes befindet sich in dem anderen Schnittpunkt 13 eine Be- und Entladestation 12, an der mittels eines nicht dargestellten Handhabungssystems die Be- und Entladung der Werkstückspindel 5, 6 mit bzw. von Werkstücken 2 erfolgt. Die Werkstücke 2 werden dabei im Ausführungsbeispiel mit einem Band (Förderband) 23 an- bzw. abtransportiert. Natürlich ist genauso jede andere Art der Bereitstellung bzw. des Abtransports von Werkstücken 2 möglich, z. B. eine Beladezelle.

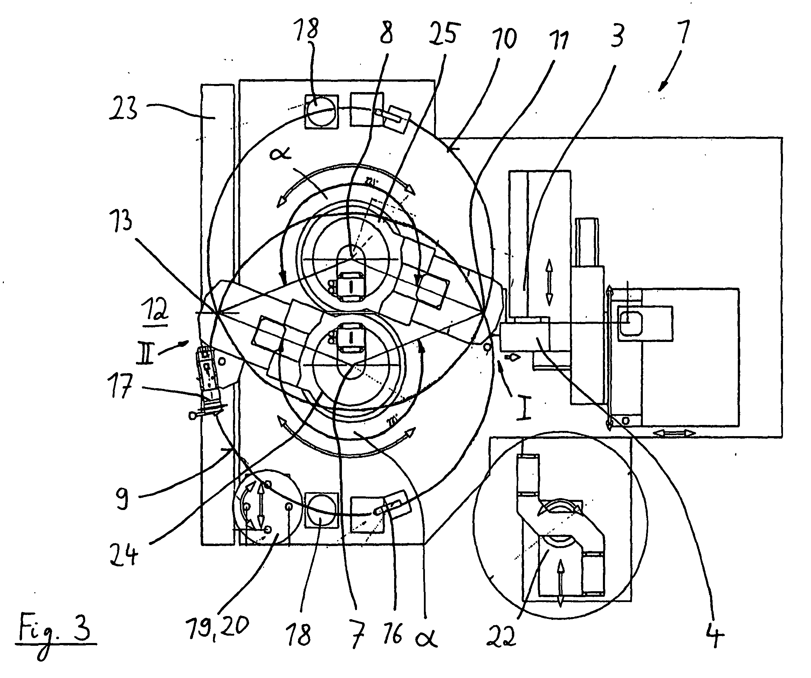

Die Verschwenkung der Werkstückspindeln 5, 6 samt Werkstücken 2 erfolgt dabei vorliegend, indem die Werkstückspindeln 5, 6 um die Schwenkachsen 7 bzw. 8 um einen Winkel α (s. Fig. 3) hin und her geschwenkt werden, der hier ca. 220° beträgt.

In der Schleifposition I befindet sich im Bereich des Schnittpunkts 11 ein (optionaler) Gegenhalter 14, der ortsfest auf dem Maschinenbett 15 angeordnet ist. Der Gegenhalter wird von beiden Werkstückspindeln 5, 6 während des Schleifens genutzt.

Der wesentliche Vorteil der vorgeschlagenen Konzeption ist, dass aufgrund der unabhängigen Schwenkbewegung der beiden Werkstückspindeln 5, 6 die Bearbeitungs-Hauptzeiten für das Schleifen eines der Werkstücke auf einer der Werkstückspindeln 5, 6 optimal genutzt werden kann, um zeitparallel auf der anderen Werkstückspindel die diversen nebenzeitrelevanten Prozessschritte durchzuführen, die erforderlich bzw. wünschenswert (d. h. optional) sind.

Demgemäß befinden sich entlang der Kreisbögen 9, 10, die beim Verschwenken von der Schleifposition I zur Beladeposition II bzw. umgekehrt von der Werkstückspindel 5, 6 bzw. dem Werkstück 2 überstrichen werden, verschiedene Vorrichtungselemente, mit denen die benötigten bzw. gewünschten Maßnahmen durchgeführt werden können.

Hier ist zunächst ein Ausrichtgerät 16 zu nennen, das dazu dient, das auf der Werkstückspindel 5, 6 gespannte Werkstück 2 auszurichten bzw. einzumitten, so dass das Schleifwerkzeug 4 kollisionsfrei bei dem sich anschließenden Schleifen in die Zahnlücken eintreten kann. Je ein Ausrichtgerät 16 ist ortsfest auf dem Maschinenbett 15 auf jeder Schwenkbahn angeordnet. Bei vorbekannten Maschinen ist ein manuelles Einstellen des Ausrichtgeräts 16 auf den jeweiligen Werkstück-Außendurchmesser erforderlich. Dies gilt nicht für die vorgeschlagene Ausgestaltung, d. h. dies kann vorteilhaft entfallen.

Vorteilhafte, aber nur optionale weitere Elemente verbessern den Prozess: Hierzu ist zunächst weiter vorgesehen, dass je eine Schleuderstation 18 auf jeder Schwenkbahn angeordnet ist. Hier kann das Abschleudern des an den Werkstücken 2 haftenden Rest-Bearbeitungsöls erfolgen. Aufgrund des "Pick-Up"-Konzepts sind hierbei "passive" Schleuderstationen realisierbar. Es sind keine speziellen Greifsysteme für bestimmte Bauteiltypen erforderlich, die Einrichtung arbeitet praktisch rüstfrei. Üblich ist zumeist der Einsatz einer angetriebenen Schleuderstation, d. h. die Schleuder verfügt über einen Drehantrieb für die zu schleudernden Werkstücke. Bei der "passiven" Schleuderstation wird indes die Drehbewegung der Werkstückspindel zum Schleudern genutzt. Die Schleuderstation ist demgemäß lediglich z. B. ein nach oben offener Behälter, in den das auf der Werkstückspindel gespannte Werkstück eingefahren wird und dort mit dem Werkstückantrieb zwecks Schleudern gedreht wird. Ein Umspannen des Werkstücks von der Werkstückspindel auf eine "aktive" Schleuderstation kann entfallen.

Weiterhin kann eine Spannmittel-Wechselstation 19 vorgesehen werden, die vorliegend mit einer Station 20 zur Ablage eines Werkstücks 2 kombiniert ist. Die kombinierte Einheit 19/20 ist mit einem Rundschalttisch 21 versehen, der mindestens zwei Ablageplätze bereitstellt. Zum automatischen Spannmittelwechsel stehen zwei Wechselplätze zur Verfügung. Das aktuell genutzte Spannmittel wird in einem Leerplatz abgelegt, das neue Spannmittel wird von einem weiteren Platz, an dem es vorgehalten wird, anschließend aufgenommen. Sowohl das Ablegen als auch das Aufnehmen der Spannmittel erfolgt automatisch mit entsprechenden, nicht dargestellten, aber an sich bekannten Handhabungselementen.

Für das Ausschleusen von SPC-Teilen (Messteilen) sowie von NIO-Teilen (Ausschussteilen) steht in der Maschine ebenfalls der bereits genannte Rundschalttisch 21 zur Verfügung, der - wie gesagt - mindestens zwei Ablageplätze hat. Diese Funktion wird bei vorbekannten Lösungen normalerweise außerhalb der Maschine vorgehalten, was zu komplexen Automatisierungseinrichtungen führt. Gemäß dem erfindungsgemäßen Vorschlag lässt sich diese Funktionalität indes sehr viel einfacher bewerkstelligen.

Selbstverständlich können entlang der Schwenkbahnen der Werkstückspindeln 5, 6 auch weitere Stationen installiert werden, die die Funktionalität weiter erhöhen.

Ein automatischer Werkzeugwechsel wird durch eine Schleifwerkzeug-Wechselstation 22 möglich, die in der Nähe der Werkzeugspindel 3 positioniert ist. Hier stehen zwei Wechselplätze zur Verfügung. Das aktuell genutzte Schleifwerkzeug 4 kann zunächst auf einem Leerplatz abgelegt werden. Anschließend wird das neue Werkzeug aus dem zweiten Platz aufgenommen und auf der Werkzeugspindel 3 angeordnet. Das Ablegen und das Aufnehmen erfolgt in einem automatischen Ablauf.

Werden, was optional möglich ist, abrichtbare Schleifwerkzeuge (Schleifscheiben oder Schleifschnecken) 4 vorgesehen, kann vorteilhaft weiterhin vorgesehen sein, dass ein Abrichtgerät 17 auf einer der Werkstückspindeln (im Ausführungsbeispiel auf der Werkstückspindel 5) angeordnet wird. Damit ist es möglich, das Abrichtgerät 17 zwecks Abrichtens des Schleifwerkzeugs 4 in die Position I zu verbringen, um das Schleifwerkzeug 4 abzurichten.

Nicht dargestellt, aber natürlich genauso möglich ist es, außerhalb der Schleifmaschine 1 abgerichtete Schleifwerkzeuge insbesondere über die Schleifwerkzeug-Wechselstation 22 einzuwechseln. Damit ergibt sich eine weitere Prozess-Nebenzeit-Ersparnis gegenüber dem Abrichten in der Maschine.

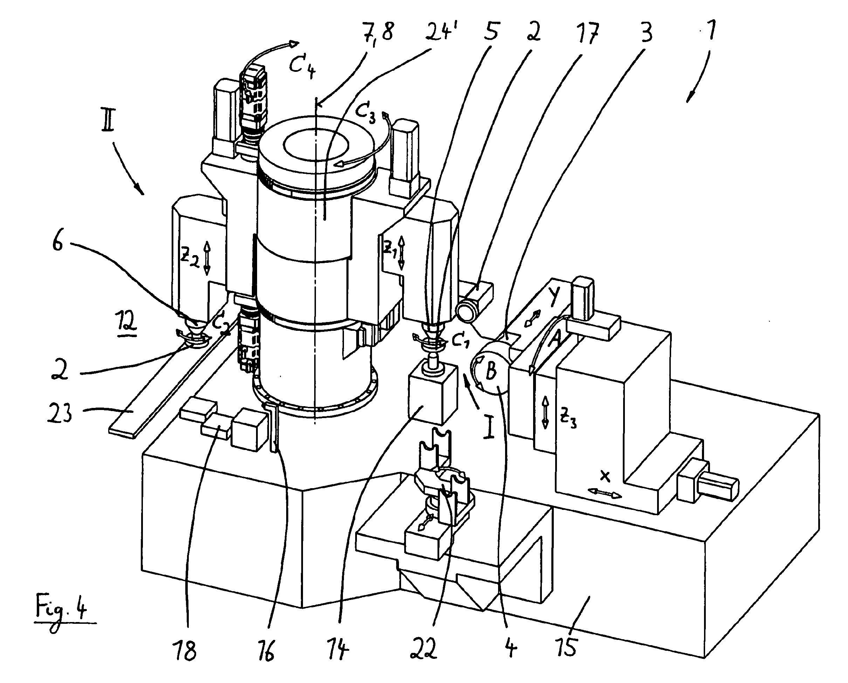

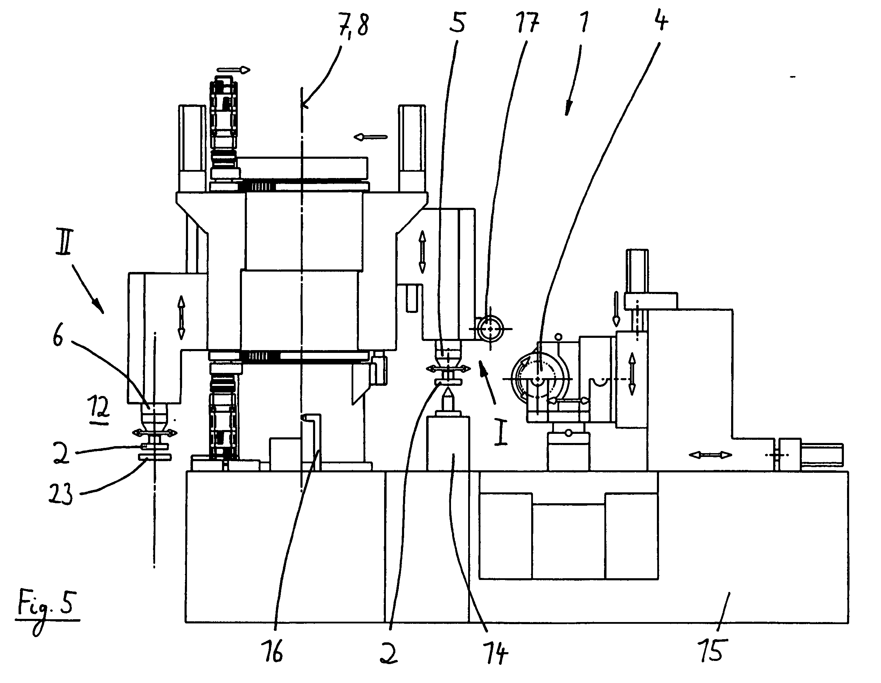

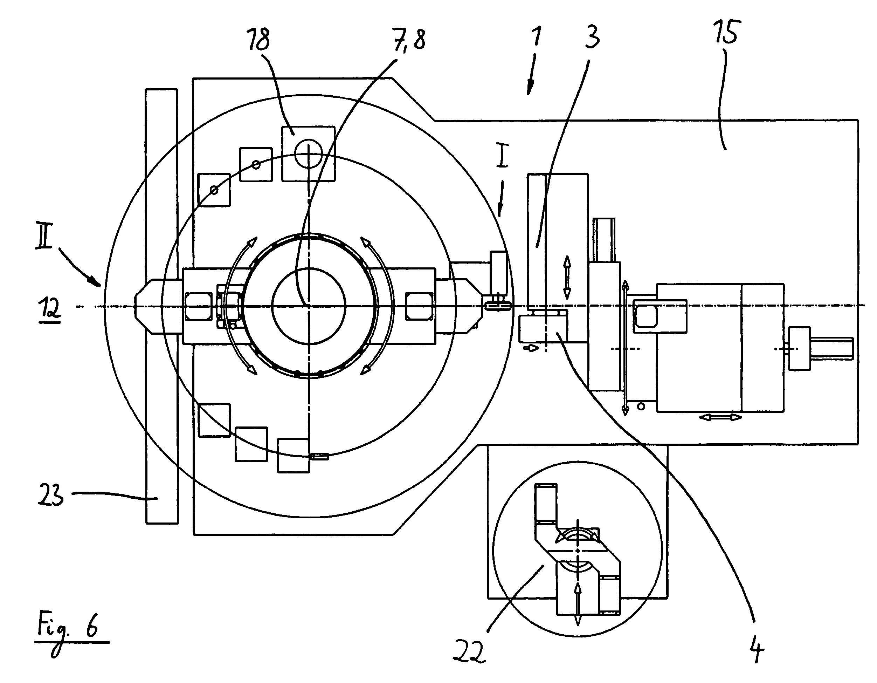

In den Figuren 4 bis 6 ist eine alternative Ausführungsform der erfindungsgemäßen Schleifmaschine 1 dargestellt. Der einzige Unterschied besteht hier darin, dass die beiden Schwenkachse 7 und 8 konzentrisch sind, d. h. der Abstand a (s. Fig. 1) ist Null.

Demgemäß ist nur eine säulenartige Führung 24' vorhanden, die in Richtung der Schwenkachsen 7, 8 geteilt ausgebildet ist: Der obere Teil verschwenkt die Werkstückspindel 5, der untere Teil verschwenkt die Werkstückspindel 6. Demgemäß kann hier eine etwas platzsparende Konstruktion realisiert werden, was die Maschinenbreite anbelangt.

Allen Konzepten ist indes gemein, dass eine unabhängige Verschwenkung der beiden Werkzeugspindeln 5, 6 möglich ist. Demgemäß kann während des Schleifens eines Werkstücks 2 in der Schleifposition I die andere Werkstückspindel völlig frei verschwenkt werden, so dass die jeweiligen erwähnten Stationen von der Be- und Entladung bis zum Ausrichten des Werkstücks 2 hauptzeitparallel angefahren werden können. Die Flexibilität erhöht sich hierdurch entsprechend.

Somit können insgesamt das Verhältnis von Haupt- zu Nebenzeiten optimiert und die Wirtschaftlichkeit des Schleifens von Verzahnungen und Profilen erhöht werden.

Eine Variante des dargestellten Maschinenkonzepts ist der Einsatz nur einer einzigen Schwenkachse für eine einzige Werkstückspindel; die zweite Schwenkachse mit der zweiten Werkstückspindel entfällt demgemäß. Dieses Maschinenkonzept sieht daher ähnlich aus wie dasjenige, das in Fig. 4 zu sehen ist, nur eben mit einer einzigen Werkstückspindel 5 auf einer säulenartigen Führung 24'. Hierbei wird die Werkzeugspindel 5 eingesetzt, die auch das Abrichtgerät 17 trägt.

Mit einer solchen Lösung ist es möglich, wesentliche Vorteile der beschriebenen erfindungsgemäßen Lösung zu nutzen, wobei sich allerdings natürlich nicht der volle Zeitvorteil für das parallele Fahren von Haupt- und Nebenzeiten erzielen lässt. Es ergeben sich also höhere Prozesszeiten beim Einsatz nur einer Werkstückspindel auf einer Schwenkachse an einer Säule. Damit können allerdings in wirtschaftlich noch vorteilhafter Weise Kleinserien mit kleinen Losen bzw. bei höheren Bauteilvarianzen bearbeitet werden. Es ergeben sich im Vergleich mit herkömmlichen Maschinenkonzepten die genannten Rüstvorteile.

### Bezugszeichenliste:

- 1: Verzahnungs- oder Profilschleifmaschine
- 2: Werkstück
- 3: Werkzeugspindel
- 4: Schleifwerkzeug
- 5: Werkstückspindel
- 6: Werkstückspindel
- 7: Schwenkachse
- 8: Schwenkachse
- 9: Kreisbogen
- 10: Kreisbogen
- 11: Schnittpunkt
- 12: Be- und/oder Entladestation
- 13: Schnittpunkt
- 14: Gegenhalter
- 15: Maschinenbett
- 16: Ausrichtgerät
- 17: Abrichtgerät
- 18: Schleuderstation
- 19: Spannmittel-Wechselstation
- 20: Station zur Ablage eines Werkstücks
- 21: Rundschalttisch
- 22: Schleifwerkzeug-Wechselstation
- 23: Förderband
- 24: säulenartige Führung
- 25: säulenartige Führung
- 24': säulenartige Führung

- I: Schleifposition
- II: Beladeposition

- a: Abstand
- α: Winkel

## Patentansprüche

1. Verfahren zum Betreiben einer Verzahnungs- oder Profilschleifmaschine (1) zum Schleifen vorverzahnter bzw. vorprofilierter Werkstücke (2), wobei die Maschine mindestens eine Werkzeugspindel (3) aufweist, auf der mindestens ein Schleifwerkzeug (4) aufgenommen werden kann, und wobei die Maschine mindestens zwei Werkstückspindeln (5, 6) aufweist, die zumindest zeitweise zum Zusammenwirken des Werkstücks (2) mit dem Schleifwerkzeug (4) an die Werkzeugspindel (3) heranfahrbar sind,
**dadurch gekennzeichnet,**
**dass** die mindestens zwei Werkstückspindeln (5, 6) zwecks Verbringung von einer Schleifposition (I) zu einer Beladeposition (II) und umgekehrt um eine jeweilige Schwenkachse (7, 8) verschwenkt werden, wobei die Verschwenkung der beiden Werkstückspindeln (5, 6) unabhängig voneinander erfolgt.

2. Verfahren nach Anspruch 1, **dadurch gekennzeichnet, dass** die beiden Schwenkachsen (7, 8) vertikal ausgerichtet sind.

3. Verfahren nach Anspruch 1 oder 2, **dadurch gekennzeichnet, dass** die beiden Schwenkachsen (7, 8) parallel und in einem Abstand (a) zueinander angeordnet sind.

4. Verfahren nach Anspruch 3, **dadurch gekennzeichnet, dass** zum Verschwenken der Werkstückspindeln (5, 6) von der Schleifposition (I) zu der Beladeposition (II) und umgekehrt diese um die jeweilige Schwenkachse (7, 8) um einen Winkel (α) zwischen 180° und 240°, vorzugsweise zwischen 200° und 230°, geschwenkt werden.

5. Verfahren nach Anspruch 1 oder 2, **dadurch gekennzeichnet, dass** die beiden Schwenkachsen (7, 8) konzentrisch angeordnet sind.

6. Verfahren nach Anspruch 5, **dadurch gekennzeichnet, dass** zum Verschwenken der Werkstückspindeln (5, 6) von der Schleifposition (I) zu der Beladeposition (II) und umgekehrt diese um die jeweilige Schwenkachse (7, 8) um einen Winkel (α) zwischen 180° und 360° vorzugsweise zwischen 180° und 270°, geschwenkt werden.

7. Verzahnungs- oder Profilschleifinaschine (1) zum Schleifen vorverzahnter bzw. vorprofilierter Werkstücke (2), wobei die Maschine mindestens eine Werkzeugspindel (3) aufweist, auf der mindestens ein Schleifwerkzeug (4) aufgenommen werden kann, und wobei die Maschine mindestens zwei Werkstückspindeln (5, 6) aufweist, die zumindest zeitweise zum Zusammenwirken des Werkstücks (2) mit dem Schleifwerkzeug (4) an die Werkzeugspindel (3) heranfahrbar sind, insbesondere zur Durchführung des Verfahrens nach einem der Ansprüche 1 bis 6,
**dadurch gekennzeichnet,**
**dass** die mindestens zwei Werkstückspindeln (5, 6) zwecks Verbringung von einer Schleifposition (I) zu einer Beladeposition (II) und umgekehrt um eine jeweilige Schwenkachse (7, 8) verschwenkbar angeordnet sind, wobei die Maschine zum unabhängigen Verschwenken der beiden Werkstückspindeln (5, 6) ausgebildet ist.

8. Maschine nach Anspruch 7, **dadurch gekennzeichnet, dass** die beiden Schwenkachsen (7, 8) vertikal ausgerichtet sind.

9. Maschine nach Anspruch 7 oder 8, **dadurch gekennzeichnet, dass** die beiden Schwenkachsen (7, 8) parallel und in einem Abstand (a) zueinander angeordnet sind.

10. Maschine nach Anspruch 9, **dadurch gekennzeichnet, dass** die Werkstückspindeln (5, 6) bei ihrer Verschwenkung um die Schwenkachsen (7, 8) Kreisbögen (9, 10) beschreiben, wobei die Werkzeugspindel (3) im Bereich eines der Schnittpunkte (11) der beiden Kreisbögen (9, 10) angeordnet ist.

11. Maschine nach Anspruch 9 oder 10, **dadurch gekennzeichnet, dass** die Werkstückspindeln (5, 6) bei ihrer Verschwenkung um die Schwenkachsen (7, 8) Kreisbögen (9, 10) beschreiben, wobei eine Be-und/oder Entladestation (12) für die Werkstücke (2) im Bereich eines der Schnittpunkte (13) der beiden Kreisbögen (9, 10) angeordnet ist.

12. Maschine nach Anspruch 7 oder 8, **dadurch gekennzeichnet, dass** die beiden Schwenkachsen (7, 8) der beiden Werkstückspindeln (5, 6) konzentrisch zueinander angeordnet sind.

13. Maschine nach einem der Ansprüche 7 bis 12, **dadurch gekennzeichnet, dass** im Bereich der Werkzeugspindel (3) ein Gegenhalter (14) ortsfest auf oder an einem Maschinenbett (15) angeordnet ist.

14. Maschine nach einem der Ansprüche 7 bis 13, **dadurch gekennzeichnet, dass** an einer Stelle entlang des Kreisbogens (9, 10) ein Ausrichtgerät (16) für das Werkstück (2) und/oder eine Schleuderstation (18) für das Werkstück (2) und/oder eine Spannmittel-Wechselstation (19) und/oder eine Station (20) zur Ablage eines Werkstücks (2) ortsfest auf oder an dem Maschinenbett (15) angeordnet ist.

15. Maschine nach einem der Ansprüche 7 bis 14, **dadurch gekennzeichnet, dass** an einer der beiden Werkstückspindeln (5, 6) weiterhin ein Abrichtgerät (17) für das Schleifwerkzeug (4) angeordnet ist, das zusammen mit der Werkstückspindel (5, 6) verschwenkt werden kann.

## Claims

1. Method for the operation of a gear or profile grinding machine (1) for the grinding of pre-geared or pre-profiled workpieces (2), wherein the machine comprises at least one tool spindle (3) which can carry at least one grinding tool (4) and wherein the machine comprises at least two workpiece spindles (5, 6) which can at least temporarily be driven to the tool spindle (3) for cooperation of the workpiece (2) with the grinding tool (4),
**characterized in that**
the at least two workpiece spindles (5, 6) are pivoted around a respective axis of rotation (7, 8) for transportation from a grinding position (I) to a loading station (II) and vice versa, wherein the rotation of the two workpiece spindles (5, 6) takes place independently from another.

2. Method according to claim 1, **characterized in that** the two axes of rotation (7, 8) are arranged vertically.

3. Method according to claim 1 or 2, **characterized in that** the two axes of rotation (7, 8) are arranged parallel and in a distance (a) to another.

4. Method according to claim 3, **characterized in that** for rotation of the workpiece spindles (5, 6) from the grinding position (I) into the loading station (II) and vice versa the same are rotated around the respective axis of rotation (7, 8) by an angle (α) between 180° and 240°, preferably between 200° and 230°.

5. Method according to claim 1 or 2, **characterized in that** the two axes of rotation (7, 8) are arranged concentrically.

6. Method according to claim 5, **characterized in that** for rotation of the workpiece spindles (5, 6) from the grinding position (I) into the loading station (II) and vice versa the same are rotated around the respective axis of rotation (7, 8) by an angle (α) between 180° and 360°, preferably between 180° and 270°.

7. Gear or profile grinding machine (1) for the grinding of pre-geared or pre-profiled workpieces (2), wherein the machine comprises at least one tool spindle (3) which can carry at least one grinding tool (4) and wherein the machine comprises at least two workpiece spindles (5, 6) which can at least temporarily be driven to the tool spindle (3) for cooperation of the workpiece (2) with the grinding tool (4), especially for performing the method according to one of claims 1 till 6, **characterized in that**
the at least two workpiece spindles (5, 6) are arranged pivotable around a respective axis of rotation (7, 8) for transportation from a grinding position (I) to a loading station (II) and vice versa, wherein the machine is designed for an independent rotation of the two workpiece spindles (5, 6).

8. Machine according to claim 7, **characterized in that** the two axes of rotation (7, 8) are arranged vertically.

9. Machine according to claim 7 or 8, **characterized in that** the two axes of rotation (7, 8) are arranged parallel and in a distance (a) to another.

10. Machine according to claim 9, **characterized in that** the workpiece spindles (5, 6) depict circular arcs (9, 10) during their rotation around the axis of rotation (5, 6), wherein the tool spindle (3) is arranged in the area of one of the intersection points (11) of the two circular arcs (9, 10).

11. Machine according to claim 9 or 10, **characterized in that** the workpiece spindles (5, 6) depict circular arcs (9, 10) during their rotation around the axis of rotation (5, 6), wherein a loading and/or unloading station (12) for the workpieces (2) is arranged in the area of one of the intersection points (13) of the two circular arcs (9, 10).

12. Machine according to claim 7 or 8, **characterized in that** the two axes of rotation (5, 6) of the two workpiece spindles (5, 6) are arranged concentrically.

13. Machine according to one of claims 7 to 12, **characterized in that** a counter support (14) is arranged stationary in the area of the tool spindle (3) on or at a machine bed (15).

14. Machine according to one of claims 7 to 13, **characterized in that** an alignment device (16) for the workpiece (2) and/or a centrifuge station (18) for the workpiece (2) and/or a clamping device changing station (19) and/or a workpiece depositing station (20) is arranged stationary at a position along the circular arc (9, 10) on or at the machine bed (15).

15. Machine according to one of claims 7 to 14, **characterized in that** at one of the two workpiece spindles (5, 6) furthermore a dressing device (17) for the grinding tool (4) is arranged which can be rotated together with the workpiece spindles (5, 6).

## Revendications

1. Procédé pour faire fonctionner une machine de rectification de dents ou de profilés (1) pour rectifier des pièces (2) déjà dentées ou profilées, la machine présentant au moins une broche porte-outil (3), sur laquelle peut être reçu au moins un outil de rectification (4), et la machine présentant au moins deux broches porte-pièce (5, 6), qui peuvent être avancées contre la broche porte-outil (3) au moins temporairement en vue de faire coopérer la pièce (2) avec l'outil de rectification (4),
**caractérisé en ce que**
les au moins deux broches porte-pièce (5, 6) sont pivotées autour d'un axe de pivotement respectif (7, 8) en vue de les amener d'une position de rectification (I) dans une position de chargement (II) et inversement, le pivotement des deux broches porte-pièce (5, 6) s'effectuant indépendamment l'une de l'autre.

2. Procédé selon la revendication 1, **caractérisé en ce que** les deux axes de pivotement (7, 8) sont orientés verticalement.

3. Procédé selon la revendication 1 ou 2, **caractérisé en ce que** les deux axes de pivotement (7, 8) sont disposés parallèlement et à une distance (a) l'un de l'autre.

4. Procédé selon la revendication 3, **caractérisé en ce que** pour faire pivoter les broches porte-pièce (5, 6) de la position de rectification (I) dans la position de chargement (II) et inversement, celles-ci sont pivotées autour de l'axe de pivotement respectif (7, 8) suivant un angle (α) compris entre 180° et 240°, de préférence entre 200° et 230°.

5. Procédé selon la revendication 1 ou 2, **caractérisé en ce que** les deux axes de pivotement (7, 8) sont disposés concentriquement.

6. Procédé selon la revendication 5, **caractérisé en ce que** pour faire pivoter les broches porte-pièce (5, 6) de la position de rectification (I) dans la position de chargement (II) et inversement, celles-ci sont pivotées autour de l'axe de pivotement respectif (7, 8) suivant un angle (α) compris entre 180° et 360°, de préférence entre 180° et 270°.

7. Machine de rectification de dents ou de profilés (1) pour rectifier des pièces (2) déjà dentées ou profilées, la machine présentant au moins une broche porte-outil (3), sur laquelle peut être reçu au moins un outil de rectification (4), et la machine présentant au moins deux broches porte-pièce (5, 6), qui peuvent être avancées contre la broche porte-outil (3) au moins temporairement en vue de faire coopérer la pièce (2) avec l'outil de rectification (4) selon l'une quelconque des revendications 1 à 6,
**caractérisée en ce que**
les au moins deux broches porte-pièce (5, 6) sont disposées de manière à pouvoir pivoter autour d'un axe de pivotement respectif (7, 8) en vue de les amener d'une position de rectification (I) dans une position de chargement (II) et inversement, la machine étant réalisée de manière à permettre le pivotement indépendant des deux broches porte-pièce (5, 6).

8. Machine selon la revendication 7, **caractérisée en ce que** les deux axes de pivotement (7, 8) sont orientés verticalement.

9. Machine selon la revendication 7 ou 8, **caractérisée en ce que** les deux axes de pivotement (7, 8) sont disposés parallèlement et à une distance (a) l'un par rapport à l'autre.

10. Machine selon la revendication 9, **caractérisée en ce que** les broches porte-pièce (5, 6), lors de leur pivotement autour des axes de pivotement (7, 8), décrivent des arcs de cercle (9, 10), la broche porte-outil (3) étant disposée dans la région de l'un des points d'intersection (11) des deux arcs de cercle (9, 10).

11. Machine selon la revendication 9 ou 10, **caractérisée en ce que** les broches porte-pièce (5, 6), lors de leur pivotement autour des axes de pivotement (7, 8), décrivent des arcs de cercle (9, 10), un poste de chargement et/ou de déchargement (12) pour les pièces (2) étant disposé dans la région de l'un des points d'intersection (13) des deux arcs de cercle (9, 10).

12. Machine selon la revendication 7 ou 8, **caractérisée en ce que** les deux axes de pivotement (7, 8) des deux broches porte-pièce (5, 6) sont disposés de manière concentrique l'un avec l'autre.

13. Machine selon l'une quelconque des revendications 7 à 12, **caractérisée en ce que** dans la région de la broche porte-outil (3) est disposée une contrebutée (14) fixement sur ou contre un banc de machine (15).

14. Machine selon l'une quelconque des revendications 7 à 13, **caractérisée en ce qu'**un appareil d'alignement (16) pour la pièce (2) et/ou un poste d'accélération (18) pour la pièce (2) et/ou un poste de remplacement de moyen de serrage (19) et/ou un poste (20) pour déposer une pièce (2) fixement sur ou contre le banc de machine (15) est disposé à un emplacement le long de l'arc de cercle (9, 10).

15. Machine selon l'une quelconque des revendications 7 à 14, **caractérisée en ce qu'**un appareil d'alignement (17) pour l'outil de rectification (4) est en outre disposé sur l'une des deux broches porte-pièce (5, 6), lequel appareil d'alignement peut être pivoté conjointement avec la broche porte-pièce (5, 6).
